Europäisches Patentamt

European Patent Office

Office européen des brevets

(11) Veröffentlichungsnummer : **0 046 965**
**B1**

(12) **EUROPÄISCHE PATENTSCHRIFT**

(45) Veröffentlichungstag der Patentschrift :
22.01.86

(21) Anmeldenummer : 81106568.9

(22) Anmeldetag : 25.08.81

(51) Int. Cl.⁴ : **G 01 F  1/32**, G 01 F  1/28,
**G 01 F  1/86**

(54) **Verfahren und Vorrichtung zur dynamischen und dichteunabhängigen Bestimmung des Massenstroms.**

(30) Priorität : 29.08.80 DE 3032578

(43) Veröffentlichungstag der Anmeldung :
10.03.82 Patentblatt 82/10

(45) Bekanntmachung des Hinweises auf die Patenterteilung : 22.01.86 Patentblatt 86/04

(84) Benannte Vertragsstaaten :
**AT BE CH DE FR GB IT LI LU NL SE**

(56) Entgegenhaltungen :
FR-A- 2 173 962
US-A- 3 719 073
US-A- 3 878 716
US-A- 3 996 796
US-A- 4 112 879
US-A- 4 196 621

(73) Patentinhaber : **Battelle-Institut e.V.**
**Am Römerhof 35 Postfach 900 160**
**D-6000 Frankfurt/Main 90 (DE)**

(72) Erfinder : **Kolitsch, Jörg**
**Georgenstrasse 102**
**D-8000 München 40 (DE)**
Erfinder : **Sparwel, Norbert**
**Berkheimerstrasse 15**
**D-5210 Troisdorf (DE)**
Erfinder : **Brockmann, Eugen, Dr.**
**Sperberstrasse 7**
**D-6232 Bad Soden/Ts. (DE)**

(74) Vertreter : **Rupprecht, Klaus, Dipl.-Ing.**
**Am Römerhof 35**
**D-6000 Frankfurt (Main) 90 (DE)**

0 046 965

**Beschreibung**

Die Erfindung betrifft ein Verfahren zur dynamischen und dichteunabhängigen Bestimmung des Massenstromes von in Kanälen strömenden Fluiden, bei dem in die Strömung ein einziger Störkörper eingebracht wird, welcher Wirbel nach dem Prinzip der Karman'schen Wirbelstraße erzeugt und die Amplituden und die Frequenzen der vom Störkörper verursachten elektrischen Signale als ein Maß für den Massenstrom benutzt werden, wobei die Amplitude der Fluiddichte und die Frequenz der über die Wirkung der Wirbelablösung erfassten Geschwindigkeit der Strömung proportional ist. Die Erfindung betrifft ferner Vorrichtungen zur Durchführung dieses Verfahrens, mit einem in die Strömung einzubringenden, ein- oder beidseitig eingespannten Störkörper, Meßwertaufnehmer und einer Signalauswerteelektronik.

Die gebräuchlichsten Verfahren zur Bestimmung des Massenstromes basieren auf Messungen des Volumenstroms bzw. der Geschwindigkeit und der Dichte des Mediums und der nachfolgenden rechnerischen Kombination dieser beiden Meßgrößen. Dynamische Echtzeitmessungen der Dichte sind gewöhnlich nur in solchen Medien möglich, bei denen die chemische Zusammensetzung und die thermodynamischen Zustandsfunktionen bekannt sind. Dies ist bei vielen technischen Anwendungen jedoch nicht der Fall.

Selbst wenn die Zusammensetzung und die Zustandsfunktionen bekannt sind, bedeutet die Dichtebestimmung einen hohen meßtechnischen Aufwand, da Druck und Temperatur gemessen und daraus die Dichte berechnet werden müssen.

Zahlreiche Vorrichtungen zur Messung des Volumenstromes bzw. der Geschwindigkeit besitzen bewegliche Teile, z. B. Flügelradanemometer, Drehkolbenzähler, und sind daher besonders empfindlich gegen Verschleiß und Verschmutzung. Auch Verfahren, welche Druckmessungen erfordern, z. B. Blendenmessungen, Staudruckmessungen, sind wegen der dabei vorhandenen Druckaufnahmebohrungen, -leitungen und -membranen häufig anfällig gegen Verschmutzungen des Mediums durch Feststoffpartikel o. ä., was zu erheblichen Meßfehlern bzw. zu verstärkt notwendigem Wartungsaufwand für die Meßeinrichtung führt. Außerdem verursachen viele der bekannten Verfahren einen hohen Druckverlust durch die Meßstelle selbst. Es sind bereits Strömungsmesser bekannt, die nach dem Prinzip der Karman'schen Wirbelstraße arbeiten (z. B. US-A-4 196 621, 3 587 312, DE-A-28 27 985, US-A-3 972 232, DE-A-24 08 246, DE-A-20 37 198). Diese Verfahren und Vorrichtungen sind jedoch ausnahmslos nur zur Messung der Geschwindigkeit, nicht jedoch des Massenstromes geeignet.

Es gibt auch Ansätze dafür, den Massenstrom über die Verwirbelung des Fluids durch Störkörper zu ermitteln (US-A-3 885, 432, DE-B-14 98 271), wobei durch Druckmessung an den Wirbeln selbst ein einziges Signal gewonnen wird, dessen Frequenz ein Maß für die Geschwindigkeit des Fluids und dessen Amplitude ein Maß für die kinetische Energie der Wirbel darstellt. Es besteht jedoch kein eindeutiger Zusammenhang, nach welchem von der kinetischen Energie der Wirbel auf die kinetische Energie des Fluids geschlossen werden kann, insbesondere wenn sich Verschmutzungen oder andersphasige Bestandteile im Fluid befinden. Außerdem müssen für eine genaue Messung die Wirbel sehr gut ausgebildet sein, was einen hohen Druckverlust bewirkt.

In einem bekannten Verfahren zur Messung des Massenstromes wird ein zweiteiliger Störkörper parallel zur Strömungsrichtung in die Strömung eingebracht und befestigt (US-A-3 719 073). Separat und stromab vom Störkörper wird ein elektrisches Signal gewonnen, dessen Amplitude proportional der Fluiddichte und dessen Frequenz proportional der Strömungsgeschwindigkeit ist. Diese Methode ermöglicht zwar eine dichteunabhängige Messung, hat jedoch den Nachteil, daß die Reibungseinflüsse das Meßergebnis verfälschen können und außerdem durch die ungünstige Ausbildung und Befestigung des Störkörpers ein relativ hoher Druckverlust entsteht.

Der vorliegeneden Erfindung liegt daher die Aufgabe zugrunde, eine einfache Methode und eine Meßeinrichtung zu schaffen, die es ermöglicht, ohne Kenntnis der Dichte des Strömungsmediums dynamisch den Massenstrom zu bestimmen, d. h. auch unabhängig zu sein von Schwankungen der chemischen Zusammensetzung, der Dichte und der Geschwindigkeit des Fluids. Darüber hinaus soll die Vorrichtung möglichst keine beweglichen Teile besitzen, wenig anfällig sein gegenüber Verschmutzung und keinen zu hohen Druckverlust an der Meßstelle bewirken.

Diese Aufgabe ist erfindungsgemäß dadurch gelöst, daß der Störkörper senkrecht zu der Strömungsrichtung angebracht wird und daß die elektrischen Signale unmittelbar aus dem Störkörper gewonnen werden, wobei zur Erzielung einer der Fluiddichte proportionalen Amplitude des elektrischen Signals, über die Wirkung des Strömungwiderstands der Staudruck p erfaßt und der Massenstrom m mit Hilfe der Gleichung

$$\dot{m} = p\frac{2}{v}A \qquad\qquad (I)$$

bestimmt wird, wobei v die Strömungsgeschwindigkeit und A der Querschnitt des Strömungskanals ist.

Einige Ausführungsformen des erfindungsgemäßen Verfahrens sind in den Ansprüchen 2 bis 4 erläutert, während Ansprüche 5 bis 12 Vorrichtungen zur Bestimmung des Massenflusses betreffen.

Der quer zur Strömung eingesetzte Störkörper dient einerseits dazu, an seiner Rückseite eine

2

periodische Ablösung von Wirbeln zu erzeugen. Für die Frequenz f diese ablösenden Wirbel gilt die Beziehung

$$f = \frac{Str \cdot v}{d} \qquad (II)$$

worin Str die Strouhalzahl, v die Strömungsgeschwindigkeit und d die charakterische Dicke des Störungskörpers sind. Die Strouhalzahl kann für jeden Profilquerschnitt des Störungskörpers experimentell in Abhängigkeit von der Reynoldszahl ermittelt werden. Eine Messung der Wirbelfrequenz liefert somit nach Gleichung II unmittelbar die gesuchte Strömungsgeschwindigkeit. Dies wird in vielen Fällen dadurch erleichtert, daß die Strouhalzahl in weiten Reynoldszahlenbereichen konstant ist.

Andererseits stellt der Störkörper der Strömung einen mechanischen Widerstand entgegen. Die von der Strömung auf einen elastisch verformbaren oder elastisch gelagerten Körper ausgeübte Kraft ist meßbar durch die am Körper oder an der Lagerung auftretende elastische Verformung entsprechend einer bekannten Federkennlinie. Zwischen dieser Strömungskraft $F_w$ und dem Staudruck der Strömung

$$p = \frac{1}{2} \rho v^2$$

besteht die Beziehung

$$F_w = c_w \left( \frac{1}{2} \rho v^2 \right) \cdot A_w \qquad (III)$$

woring $c_w$ den Widerstandsbeiwert und $A_w$ die vom Körper der Strömung entgegengesetzte Widerstandsfläche bedeuten. Der Widerstandsbeiwert kann für jeden Profilquerschnitt des Störkörpers experimentell in Abhängigkeit von der Reynoldszahl ermittelt werden. Eine Messung der Verformung des Störkörpers liefert also über die Federkennlinie die Strömungskraft und somit über die Gleichung III den gesuchten Staudruck.

Dies wird in vielen Fällen dadurch erleichtert, daß der Widerstandsbeiwert in weiten Reynoldszahlenbereichen konstant ist.

Es ist auch möglich, den Staudruck unmittelbar an einem starren Körper zu ermitteln, durch Anbringen einer Druckbohrung gegen die Strömungsrichtung, wobei der Gesamtdruck der Strömung gemessen wird. Durch Differenzschaltung mit einer Durckmeßbohrung, an welcher der statische Druck der Strömung gemessen wird, erhält man den dynamischen Druck.

Erfindungsgemäß ist die Messung der Fluiddichte für die Bestimmung des Massenstroms nicht erforderlich, Dennoch ist es möglich, neben der Geschwindigkeit v, welche unmittelbar als Ergebnis der Wirbelfrequenzmessung auftritt, aus der Beziehung

$$p = \left( \frac{1}{2} \rho v^2 \right) \cdot \frac{2}{v^2} \qquad (IV)$$

rechnerisch die Dichte g einfach aus dem dynamischen Druck

$$\left( \frac{1}{2} \rho v^2 \right)$$

und der Geschwindigkeit zu ermitteln.

Das Meßverfahren beruht auf dem Prinzip, daß ein einziger Störkörper in die Strömung eingebracht wird und daß sowohl die Frequenz der durch diesen Körper verursachten ablösenden Wirbel als auch die an diesem Körper wirkende Strömungskraft als Meßgrößen gewonnen werden.

Die Aufnahme der Frequenz der ablösenden Wirbel kann am Störkörper selbst erfolgen, da die abwechselnde Wirbelablösung auf beiden Seiten der Umströmung ein entsprechendes periodisches Druckgefälle am Körper quer zur Strömungsrichtung hervorruft und den Störkörper zu Schwingungen quer zur Strömungsrichtung mit der Wirbelfrequenz anregt. Dieses Verhalten kann auch mit Hilfe der Auftriebskraft $F_A$ am Körper und einem periodisch mit der Zeit variablen Auftriebsbeiwert $c_A(t)$ beschrieben werden mit der Beziehung

$$F_A(t) = c_A(t) \cdot \left( \frac{1}{2} \rho v^2 \right) \cdot A_A \qquad (V)$$

in welcher

3

$$\left(\frac{1}{2}\rho v^2\right)$$

den Staudruck und $A_A$ die Auftriebsfläche des Körpers bedeuten. Die schwingende Verformung eines elastischen oder elastisch gelagerten Störkörpers aufgrund dieser Auftriebskraft kann nun unmittelbar durch Dehnungsmeßstreifen, piezoresistive Aufnehmer oder andere Wegaufnehmer als elektrisches Signal erfaßt werden, wobei die Frequenz des Signals gleich der Wirbelfrequenz ist und nach Gleichung II die Geschwindigkeit der Strömung liefert.

Für den Fall, daß das Querschnittsprofil des Strömungskörpers in Richtung der Auftriebskraft nicht symmetrisch ist, treten zusätzlich zur Biegung auch Torsions- bzw. Deviationsphänomene auf. Auch diese Weg- und Winkeländerungen können als Meßgröße erfaßt werden, um die Auftriebskraft zu bestimmen.

Die Strömungskraft kann indirekt über die elastische Verformung bzw. Durchbiegung des Störkörpers oder dessen Lagerung in Strömungsrichtung mit Hilfe von Dehnungsmeßstreifen, piezoresistiven Aufnehmern oder anderen Wegaufnehmern erfaßt werden. Hierzu muß die Federkennlinie des Körpers und die Lastverteilung, d. h. das Strömungsprofil, bekannt sein. Mittels des Widerstandsbeiwertes $c_w$ läßt sich dann mit Gleichung III der dynamische Druck bzw. Staudruck berechnen.

Die Durchbiegung des Störungskörpers sowohl in Strömungsrichtung als auch senkrecht dazu können auch kombiniert in einem einzigen Signal erfaßt werden. Hierbei wird die gesamte elastische Verformung aufgrund der aus Widerstands- und Auftriebskraft resultierenden Gesamtkraft

$$F = \sqrt{F_w^2 + F_A^2} \qquad\qquad (VI)$$

aufgenommen, wobei die mittlere Amplitude des oszillierenden Meßsignals der Durchbiegung aufgrund der Strömungskraft und die Frequenz der Oszillationen der Wirbelfrequenz entsprechen. Eine solche kombinierte Signalerfassung läßt sich technisch z. B. dadurch lösen, daß die Änderung des elektrischen Widerstandes des stromleitenden Störkörpers oder stromleitender Teile davon gemessen wird, die der Längendehnung des Körpers aufgrund seiner Durchbiegung proportional ist. Als stromleitende Teile werden auch am Körper angebrachte Dehnungsmeßstreifen, piezoelektrische Aufnehmer oder andere Wegaufnehmer angesehen, wobei jeweils nur ein einziger Aufnehmer die gesamte oszillierende Verformung erfaßt.

Erfindungsgemäß muß der Störkörper für verschiedene Strömungsgeschwindigkeitsbereiche und Fluide entsprechend dimensioniert und profiliert werden, damit sowohl die Wirbelablösung als auch die Widerstandskraft des Körpers gegen die Strömung in besonders meßgünstige Wertebereiche fallen, in denen begrenzte Änderungen oder Schwankungen der Fluideigenschaften wie Dichte, Zähigkeit, chemische Zusammensetzung und Geschwindigkeit, zu keinen nennenswerten Meßfehlern führen.

Als Störkörper eignen sich in besonderem Maße glatte Stäbe, deren Querschnittsprofil in Strömungsrichtung symmetrisch ist. Um eine gute und definierte Ablösestelle für die Wirbel zu erreichen, können an der Rückseite des Profils scharfe Kanten vorgesehen werden. Weiterhin können zur Verstärkung der durch die Wirbelablösung senkrecht zur Strömungsrichtung auftretenden oszillierenden Druckdifferenz an der Rückseite des Profils eine oder mehrere zur Strömungsrichtung parallele Flächen angebracht werden. Zur Abweisung und zum Schutz vor Ablagerungen von Schmutzpartikeln, Feststoffteilchen, Flüssigkeitstropfen, usw., die sich im Fluid befinden können, besteht die Möglichkeit, auch die Vorderseite des Profiles entsprechend zu gestalten.

In solchen Fällen, in denen die Biegeverformungen des Störkörpers sowohl in Strömungsrichtung als auch senkrecht dazu zur Messung herangezogen werden sollen, ist es auch möglich, die Biegeeigenschaften des Störkörpers dadurch zu optimieren, daß der Störkörper in zwei Teile längs seiner Achse aufgespalten wird, wobei jeder Teil für sich jeweils in einer der Richtungen das günstigste Flächenträgheitsmoment besitzt. Beide Teile sind an den Enden fest zusammengefügt und steilten insgesamt einen einzigen Störkörper dar. Der axiale Abstand beider Teile wird bestimmt durch die maximale Durchbiegung des vorderen Teils in Strömungsrichtung.

Da in geführten Strömungskanälen, z. B. einem Rohr, die Strouhalzahl Str und der Widerstandsbeiwert $c_w$ von der Kontraktionsziffer, d. h. vom Verhältnis der Strömungsfläche des Störkörpers zur Kanalquerschnittsfläche abhängen können, kann in günstigen Fällen (z. B. bei großen Kanaldurchmessern und schlanken Störkörpern) eine künstliche Kontraktion hervorgerufen werden. Dies ist insbesondere möglich durch Einsetzen von zwei parallel zur Strömungsrichtung und zum Störkörper verlaufende Leitflächen in einem zu bestimmenden Abstand vom Störkörper. Diese Leitflächen können auch parallel zur Kanalwandung gekrümmt ausgeführt werden, so daß ein koaxialer innerer Kanal entsteht, in welchem die eigentliche Messung vorgenommen wird, wobei nur ein bestimmter Teil des Gesamtmassenstromes durch den inneren Kanal fließt. Der innere Kanal wird auf Stützen im eigentlichen größeren Kanal gehalten, wobei die Stützen hohl sind und die Fortleitung der elektrischen Meßsignalleitungen ermöglichen. Die Ausdehnung der Leitflächen in Strömungsrichtung vor und hinter dem Störkörper sowie die Dicke der Leitflächen muß so bemessen sein, daß die Strömung im inneren Kanal sich hydrodynamisch voll ausbilden kann. Vorzugsweise soll die Einlaufkante der Leitflächen gut abgerundet sein.

4

Gegenüber den bekannten Verfahren zur Ermittlung des Massenstroms bietet das erfindungsgemäße Verfahren den Vorteil, daß ohne Kenntnis der Dichte des Strömungsmediums der Massenstrom dynamisch gemessen werden kann, indem nur ein einziger Störkörper in die Strömung eingebracht wird. Das Querschnittsprofil des Störkörpers kann derart ausgelegt werden, daß die Messung in bestimmten Grenzen unabhängig von Schwankungen der chemischen Zusammensetzung, der Dichte, der Viskosität und der Geschwindigkeit des Fluids ist. Darüber hinaus ist das Verfahren wenig anfällig gegen Verschmutzungen des Fluids und insgesamt wartungsarm, da auch keine beweglichen Teile vorhanden sind. Durch entsprechende Auslegung kann der Druckverlust an der Meßstelle gering gehalten werden. Bei der direkten Messung der Strömungskraft wird auch der Massenanteil von Verschmutzungen oder andersphasigen Bestandteilen im Fluid im Gesamtmassenstrom mitberücksichtigt.

Im folgenden wird die Erfindung anhand von Zeichnungen näher erläutert. Es zeigen in schematischer Vereinfachung

Figur 1 eine mögliche Ausführungsform der Erfindung, bei welcher ein elastischer Störkörper gleichzeitig als Meßwertaufnehmer für die Verformung aufgrund der Widerstands- und der Auftriebskräfte dient;

Figur 2 eine weitere Ausführungsform der Erfindung, bei welcher ein einziger Dehndraht oder ein anderer einzelner Meßwertaufnehmer im Störkörper eingesetzt ist, der sowohl die Verformung aufgrund der Widerstands- als auch der Auftriebskraft erfaßt;

Figur 3 eine Ausführungsform der Erfindung, bei welcher zwei Meßwertaufnehmer im Störungskörper eingesetzt sind, wobei einer nur die Verformung aufgrund der Widerstandskraft, der andere nur die Verformung aufgrund der Auftriebskraft erfaßt;

Figur 4 eine Ausführungsform der Erfindung, bei welcher der Störkörper zweigeteilt ist und jedes Teil einen Meßwertaufnehmer enthält, welcher die der Hauptsache seines Flächenträgheitsmoments entsprechende überwiegende Verformung aufgrund der Widerstands- oder der Auftriebskräfte erfaßt;

Figur 5 eine erfindungsgemäße Ausführungsform, bei der ein elastischer Störkörper einseitig befestigt ist;

Figur 6 eine Vorrichtung, bestehend aus einem starren, mit Bohrungen versehenen Störkörper, die unbeweglich in der Strömung anzubringen ist;

Figur 7a bis 7e mögliche Ausführungsformen des Störkörpers und

Figur 8a Möglichkeiten zur Veränderung des Kontraktionsverhältnisses im Strömungskanal.

Wird ein Störkörper in die Strömung eingebracht, so lösen sich periodisch Wirbel ab. Aus den auf den Störkörper wirkenden Strömungskräften, d. h. der Widerstandskraft $F_w$ und den periodischen Auftriebskräften $F_A$, wobei $F_w$ senkrecht zu $F_A$ ist, resultiert eine Verformung eines elastischen Störkörpers. Hier wird anstelle von Widerstandskörper der Ausdruck Störkörper gewählt, weil der Körper außer zur reinen Aufnahme der Widerstandskraft zur Erzeugung von Wirbeln dienen soll.

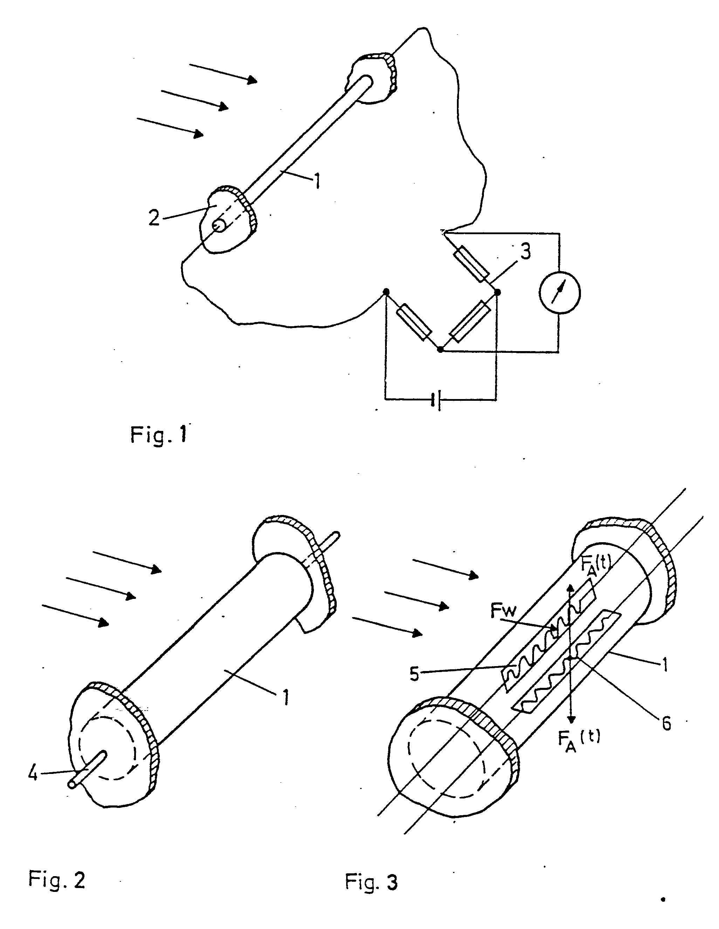

Die Vorrichtung in Fig. 1 besteht aus einem Dehndraht 1 als Störkörper, der in einem Halter 2 beidseitig eingespannt ist. Durch Verschaltung in eine Meßbrücke 3 wird die Drahtverformung in ein elektrisches Signal umgewandelt.

Nach der in Fig. 2 gezeigten Ausführungsform wird mit einem einzigen Meßwertaufnehmer 4 die Verformung des Störkörpers 1 erfaßt. Bei allen erfindungsgemäß eingesetzten Störkörpern können diese zur Verbesserung des Biegeverhaltens hohl ausgeführt und/oder mit einem biegeelastischen Material, z. B. Kunststoff, beschichtet sein.

Zur Gewinnung von zwei Signalen können bei einer in Fig. 3 gezeigten Ausführungsform in einen hohlen oder massiven Störkörper 1 zwei Meßwertaufnehmer 5 und 6 eingebracht werden, die so ausgerichtet sind, daß einer 5 die Verformung durch die Widerstandskraft und der andere 6 nur die Verformung durch die Auftriebskräfte erfaßt.

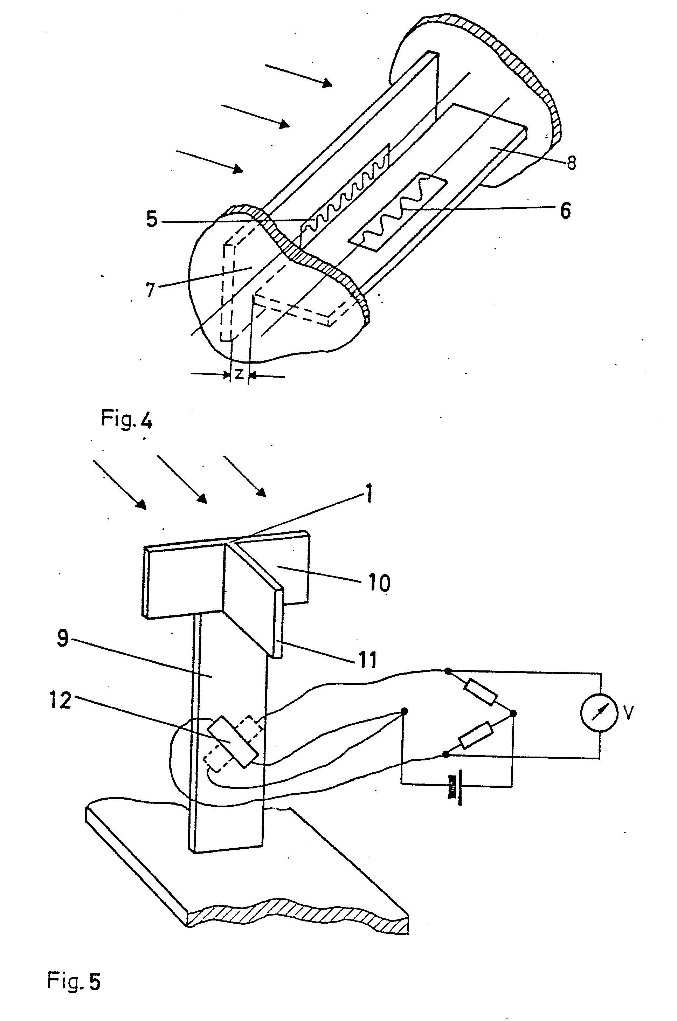

Gemäß Fig. 4 kann der Störkörper zur Verbesserung der Biegeeigenschaften hinsichtlich der Wirkung von Widerstandskraft und Auftriebskraft zweigeteilt ausgeführt sein. Die zueinander senkrecht stehenden Teile 7 und 8 mit eingebauten Meßwertaufnehmern 5 und 6 werden an den Enden miteinander befestigt. Zwischen beiden Teilen verbleibt ein Abstand, um die Durchbiegung des vorderen Teils aufgrund der Widerstandskraft zu ermöglichen.

Gemäß einer in Fig. 5 dargestellten Ausführungsform der erfindungsgemäßen Vorrichtung wird ein elastischer Störkörper 9 in der Strömung gehalten. Der Störkörper 9 weist eine quer zur Strömungsrichtung stehende Platte 10 auf. Auf der Rückseite ist eine weitere parallel zur Strömungsrichtung stehende Platte 11 vorgesehen. Diese T-förmige Verlängerung des Störungskörpers verstärkt das Torsionsmoment. Als Meßwertaufnehmer dienen Dehnungsmeßstreifen 12, die kreuzweise auf der Vorder- und Rückseite des Störkörpers 9 angebracht sind. Das gewonnene Ausgangssignal wird wie bei den oben beschriebenen Vorrichtungen ausgewertet.

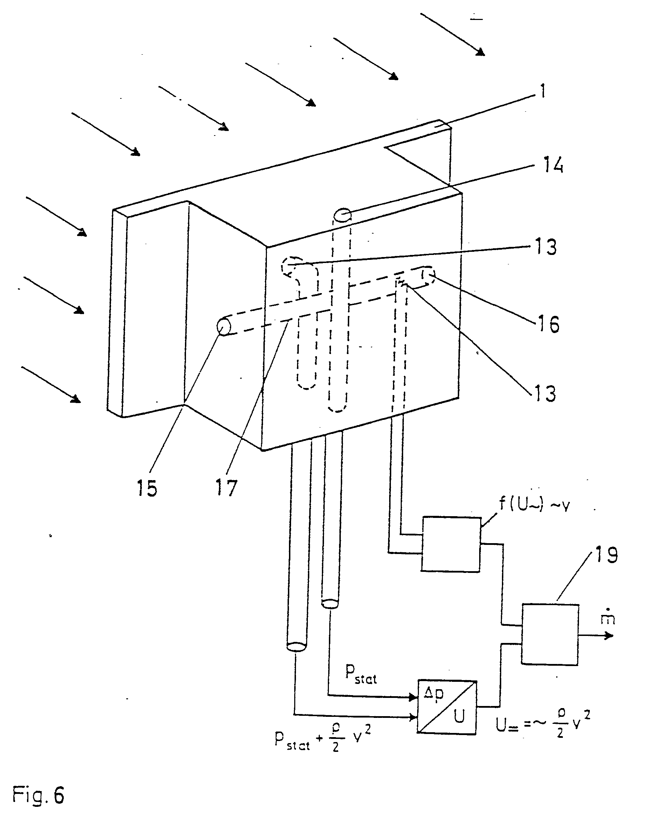

Die in Fig. 6 dargestellte Vorrichtung besteht im wesentlichen aus einem starren Störkörper 1 mit quer und parallel zur Strömungsrichtung gerichteten Flächen. Zur Bestimmung des Staudrucks sind zwei Bohrungen 13 und 14 vorgesehen, von denen eine zur Vorderfläche und die andere zu einer Fläche führt, die nicht im Totwasser liegt. Zwei weitere Öffnungen 15 und 16, die miteinander durch einen Kanal 17 verbunden sind, enden im Totwasserbereich auf zwei Seitenflächen, die sich gegenüberstehen. Zur Frequenzmessung wird ein Heißdrahtanemometer 18 verwendet. Die Signale werden in einer entsprechenden Elektronik 19 ausgewertet.

5

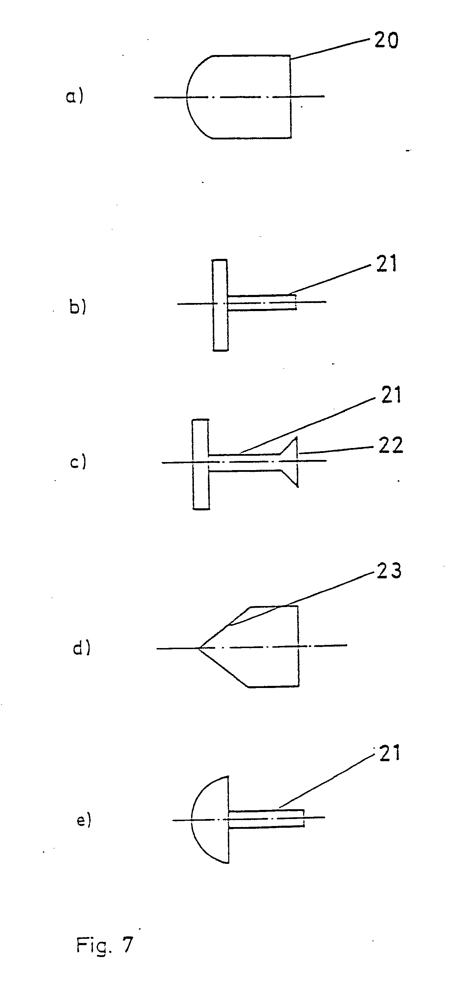

Der Störkörper kann verschiedene Querschnittsprofile besitzen. In Fig. 7 a werden an der Rückseite des Störungskörpers scharfe Kanten 20 zur besseren Ablösung der Wirbel angebracht.

Gemäß Fig. 7b kann an der Rückseite des Störungskörpers eine parallel zur Strömungsrichtung verlaufende Fläche 21 zur Verstärkung der Auftriebskräfte vorgesehen sein.

Eine weitere Verbesserung kann mit der in Figur 7c gezeigten Ausführungsform erzielt werden, bei der an der Rückseite des Störungskörpers eine parallel zur Strömungsrichtung verlaufende Fläche 21 und zusätzlich am Ende dieser Fläche zur besseren Formung der Wirbel ausgebildete Leitflügel 22 angebracht sind.

Ferner können gemäß Fig. 7d an der Vorderseite des Störungskörpers schräg zur Strömungsrichtung geneigte Flächen 23 vorhanden sein, um Schmutzteilchen oder ähnliche im Fluid befindliche Partikel abzuweisen.

Nach der in Fig. 7e gezeigten Ausführung wird zum selben Zweck die Vorderseite des Störungskörpers gut abgerundet.

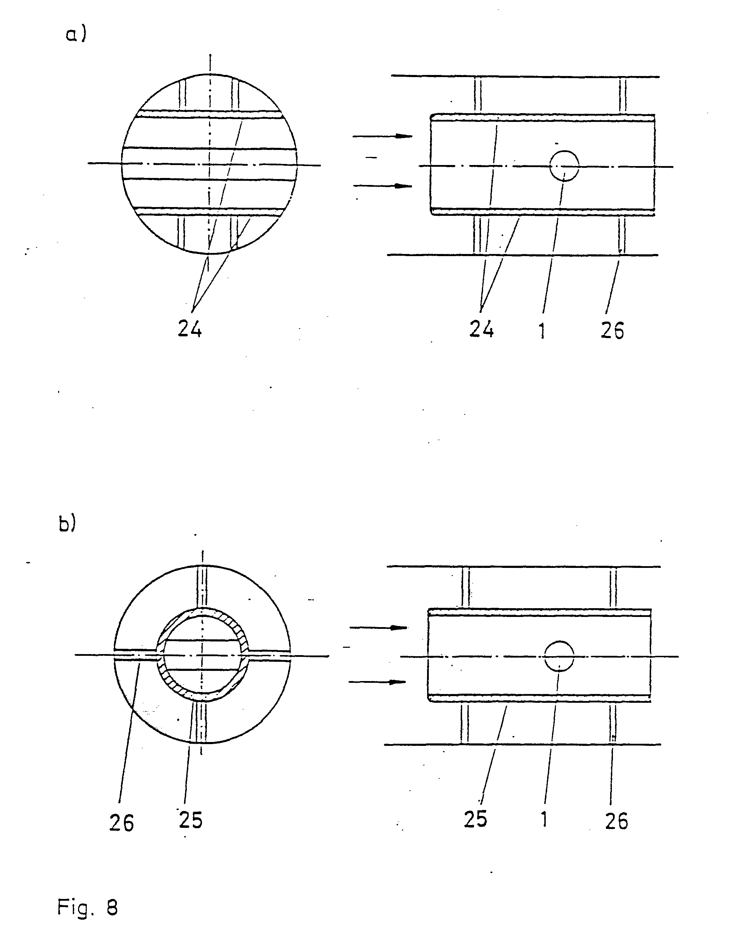

Zur Anpassung des Störkörpers an die Strömungsverhältnisse kann der Querschnitt des Strömungskanals verändert werden. In Figur 8 a wird dies durch Anbringung von zwei ebenen, dünnwandigen und gegebenenfalls durch Stützen gehaltenen Leitflächen 24 parallel zur Strömung und parallel und in gleichem Abstand zum Störkörper 1 erzielt. Dabei sollten die Einlaufkanten gut gerundet und die Längen der Flächen 24 vor und hinter dem Störungskörper 1 so bemessen sein, daß die Strömung im so gebildeten inneren Meßkanal, durch welchen nur ein Teilmassenstrom des Fluids strömt, hydrodynamisch ausgebildet ist.

Gemäß Fig. 8b wird derselbe Effekt durch Anbringung eines koaxialen Meßkanals 25 im Strömungskanal erreicht, wobei durch diesen Meßkanal nur ein Teilmassenstrom des Fluids strömt und der Störungskörper1 nur in diesem Meßkanal eingesetzt wird. Die Meßkanalwand sollte dünn und am Einlauf gut gerundet sein. Die Länge des Meßkanals sollte vor und hinter dem Störkörper eine hydrodynamisch ausgebildete Strömung gewährleisten. Der Meßkanal wird von Stützen 26 gehalten, welche hohl ausgeführt sind und somit die Fortleitung der elektrischen Signalleitungen von dem oder von den Meßwertaufnehmern durch die Meßkanalwand und durch die äußere Kanalwand ermöglichen.

**Patentansprüche**

1. Verfahren zur dynamischen und dichteunabhängigen Bestimmung des Massenstromes von in Kanälen strömenden Fluiden, bei dem in die Strömung ein einziger Störkörper eingebracht wird, welcher Wirbel nach dem Prinzip der Karman'schen Wirbelstrasse erzeugt und die Amplituden und die Frequenzen der vom Störkörper verursachten elektrischen Signale als ein Maß für den Massenstrom benutzt werden, wobei die Amplitude der Fluiddichte und die Frequenz der über die Wirkung der Wirbelablösung erfassten Geschwindigkeit der Strömung proportional ist, dadurch gekennzeichnet, daß der Störkörper senkrecht zu der Strömungsrichtung angebracht wird und daß die elektrischen Signale unmittelbar aus dem Störkörper gewonnen werden, wobei zur Erzielung einer der Fluiddichte proportionalen Amplitude des elektrischen Signals über die Wirkung des Strömungswiderstands der Staudruck P erfaßt und der Massenstrom ṁ mit Hilfe der Gleichung

$$\dot{m} = p\frac{2}{v}A$$

bestimmt wird, wobei v die Strömungsgeschwindigkeit und A der Querschnitt des Strömungskanals ist.

2. Verfahren nach Anspruch 1, dadurch gekennzeichnet, daß ein elastisch verformbarer Störkörper verwendet wird, wobei aus der Verformung aufgrund der Widerstandskraft der Staudruck und aus der Verformung aufgrund der durch die Wirbelablösung erzeugten Auftriebskräfte die Geschwindigkeit erfaßt werden.

3. Verfahren nach Anspruch 1 oder 2, dadurch gekennzeichnet, daß zwei getrennte elektrische Signale gewonnen werden, von denen eines ein Maß für den Staudruck und das andere ein Maß für die Strömungsgeschwindigkeit ist.

4. Verfahren nach Anspruch 1, dadurch gekennzeichnet, daß ein starrer, fest eingespannter Störungskörper verwendet wird, an dem der Staudruck als Meßgröße selbst als ein erstes elektrisches Signal erfaßt wird und daß aus der Wirkung der durch die Wirbelablösung senkrecht zur Strömungsrichtung hervorgerufenen Druckdifferenz ein zweites elektrisches Signal gewonnen wird, dessen Frequenz ein Maß für die Strömungsgeschwindigkeit ist.

5. Vorrichtung zur Durchführung des Verfahrens nach einem der Ansprüche 1 bis 4, mit einem in die Strömung einzubringenden ein- oder beidseitig eingespannten Störkörper (1, 11), Meßwertaufnehmer (4, 5, 6, 14) und einer Signalauswerteelektronik, dadurch gekennzeichnet, daß der Störkörper (1) senkrecht zur Strömungsrichtung einbringbar ist und selbst als Meßwertaufnehmer dient oder ein oder zwei Meßwertaufnehmer (4, 5, 6, 14) direkt an dem Störkörper (1) befestigt sind.

6. Vorrichtung nach Anspruch 5, dadurch gekennzeichnet, daß der Störkörper (1) aus einem elastisch verformbaren, elektrisch leitfähigen Draht besteht, der als Meßwertaufnehmer dient und daß der elektrische Widerstand des Störkörpers (1) bei der Verformung veränderbar ist.

7. Vorrichtung nach Anspruch 5, dadurch gekennzeichnet, daß ein elastisch verformbarer zylindrischer Störkörper vorgesehen ist, durch den ein Dehndraht als Meßwertaufnehmer (4) geführt ist.

8. Vorrichtung nach Anspruch 5, dadurch gekennzeichnet, daß der Störkörper (1) elastisch verformbar ist und daß zwei senkrecht zueinander angeordnete Meßwertaufnehmer (5, 6) im Störkörper (1) vorgesehen sind, wobei jeweils der eine vornehmlich die Widerstandskraft und der andere vornehmlich die Auftriebskraft erfaßt.

9. Vorrichtung nach Anspruch 8, dadurch gekennzeichnet, daß der Störkörper (1) zweigeteilt ausgeführt ist, wobei die beiden Teile (7, 8) an den Enden miteinander verbunden sind und daß die Flächenträgheitsmomente der beiden Teile jeweils so optimiert sind, daß ein Teil vornehmlich die Widerstandskraft und der andere Teil vornehmlich die Auftriebskraft erfaßt.

10. Vorrichtung nach Anspruch 5, dadurch gekennzeichnet, daß der Störkörper (9) elastisch ist und eine quer zur Strömungsrichtung stehende Platte (10) aufweist und daß Dehnungsmeßstreifen (12) kreuzweise auf der Vorder- und Rückseite des Störkörpers (9) angebracht sind.

11. Vorrichtung nach Anspruch 5, dadurch gekennzeichnet, daß der Störkörper (1) starr und fest eingespannt ist und daß an dem Störkörper mindestens drei Bohrungen (13, 14, 17) vorgesehen sind, wobei mindestens eine Bohrung (13) auf der Vorderfläche endet und die übrigen Bohrungen (14, 17) zu den seitlichen Flächen parallel zur Strömungsrichtung führen und daß die vordere (13) und eine der seitlichen (14) Öffnungen zur Erfassung des Staudrucks und die seitlichen, sich gegenüberliegenden Öffnungen (15, 16) zur Ermittlung der Wirbelablösefrequenz dienen und daß Meßfühler vorhanden sind, welche die erfaßten Druckwerte in elektrische Signale umwandeln.

12. Vorrichtung nach Anspruch 11, dadurch gekennzeichnet, daß zwei seitliche, sich gegenüberliegende Offnungen (15, 16) miteinander verbunden sind und in den Verbindungskanal (17) ein Heißdrahtanemometer (18) vorgesehen ist, mit dem die Frequenz der sich aufgrund der Druckschwankungen einstellenden oszillierenden Strömung gemessen wird.

**Claims**

1. Method for the dynamic and density-independent determination of the mass-flow of fluids flowing in channels, wherein a single bluff body is placed in the flow, said bluff body generating vortices according to the principle of the Karman vortex path ; and wherein the amplitudes and the frequences of the electric signals caused by the bluff body are used as a measure of the mass flow, said amplitude being proportional to the fluid density and said frequency being proportional to the velocity of flow determined via the effect of vortex shedding at said bluff body, comprising : said bluff body being arranged normal to the direction of flow and the electric signals being obtained directly from the bluff body, and in order to achieve an amplitude of the electric signal which is proportional to the fluid density, the dynamic pressure (p) being determined via the effect of the drag, and the mass flow (ṁ) being determined according to the equation

$$\dot{m} = p\,\frac{2}{v}\,A$$

wherein v is the flow velocity and A is the cross section of the flow channel.

2. Method as claimed in claim 1, wherein an elastically deformable bluff body is used, the dynamic pressure being determined from the deformation caused by the drag, and the velocity being determined from the deformation caused by the buoyancy forces which result from the vortex shedding.

3. Method as claimed in claim 1 or claim 2, wherein two separate electric signals are obtained, one of which is a measure of the dynamic pressure and the other is a measure of the flow velocity.

4. Method as claimed in claim 1, wherein a rigid bluff body with two fixed ends is used, the dynamic pressure being determined as a first electric signal directly at said bluff body, and wherein a second electric signal is obtained from the effect of the differential pressure generated by the vortex shedding in a direction normal to the direction of flow, the frequency of the latter signal being a measure of the flow velocity.

5. Device for carrying out the method as claimed in any of the claims 1 to 4, consisting essentially of a bluff body (1, 11), with one or two ends fixed, which is to be placed in the flow of transducers (4, 5, 6, 14), and of an electronic signal processing system, wherein the bluff body (1) can be arranged normal to the direction of flow and itself serves as a transducer or is provided with one or two transducers (4, 5, 6, 14).

6. Device as claimed in claim 5, wherein the bluff body (1) consists of an elastically deformable, electrically conductive wire, said wire serving as a transducer, and wherein the electrical resistance of the bluff body (1) may vary upon deformation (Fig. 1).

7. Device as claimed in claim 5, wherein a strain wire serving as a transducer (4) is mounted in an elastically deformable cylindrical bluff body (1) (Fig. 2).

8. Device as claimed in claim 5, wherein the bluff body (1) is elastically deformable and wherein two transducers arranged at a right angle (5, 6), are provided in said bluff body (1), one of said transducers determining predominantly the drag force, and the other of said transducers determining predominantly the buoyancy force (Fig. 3).

9. Device as claimed in claim 8, wherein the bluff body (1) consists of two parts (7, 8), which are connected at the ends, and wherein the moments of inertia of said two parts are optimised such that one of said parts predominantly determines the drag force, and the other of said parts predominantly determines the buoyancy force (Fig. 4).

10. Device as claimed in claim 5, wherein the bluff body (9) is elastic and provided with a plate (10) mounted normal to the direciton of flow, strain gauges (12) being crosswise fixed to the front side and the rear side of the bluff body (9) (Fig. 5).

11. Device as claimed in claim 5, wherein the bluff body (1) is rigid and fixed, said bluff body being provided with at least three bores (13, 14, 17), at least one of said bores (13) ending at its front face and the other bores (14, 17) leading to its lateral faces parallel to the direction of flow, the front opening (13) and one of the lateral openings (14) serving for determining the dynamic pressure and the lateral openings which are arranged opposite to each other (15, 16), being used to determine the vortex shedding frequency, and wherein transducers are provided which convert the measured pressure values into electric signals (Fig. 6).

12. Device as claimed in claim 11, wherein two lateral openings (15, 16) which are arranged opposite to each other, are connected, and wherein a hot-wire anemometer (18) is provided in the connecting channel (17), by means of which the frequency of the oscillating flow resulting from the pressure fluctuations is measured (Fig. 6).

### Revendications

1. Procédé pour la détermination dynamique et indépendante de la densité du courant massique de fluides qui s'écoulent dans des canaux, dans lequel il est introduit, dans le courant, un unique corps perturbateur qui produit une turbulence suivant le principe des tourbillons alternés suivant Karman, et qui utilise les amplitudes et les fréquences des signaux électriques provoqués par le corps perturbateur comme mesure du courant massique, l'amplitude étant proportionnelle à la densité du fluide, et la fréquence à celle de la vitesse du courant détectée par l'intermédiaire de l'effet du décollage de la turbulence, procédé caractérisé en ce que le corps perturbateur est posé perpendiculairement à la direction du courant, et que les signaux électriques sont obtenus directement à partir du corps perturbateur, pendant que pour obtenir une amplitude des signaux électriques proportionnelle à la densité du fluide au moyen de l'effet de la résistance du courant, on détecte la pression dynamique P, et détermine le courant massique ṁ à l'aide de l'équation

$$\dot{m} = p\frac{2}{v}A$$

v étant la vitesse du courant, et A la section du canal d'écoulement.

2. Procédé suivant la revendication 1, caractérisé en ce que l'on utilise un corps perturbateur déformable élastiquement ce qui fait que l'on détecte la pression dynamique à partir de la déformation en se basant sur la force de résistance, et la vitesse, à partir de la déformation, et sur les forces de poussée produites par le décollage de la turbulence.

3. Procédé suivant l'une des revendications 1 et 2, caractérisé en ce que l'on obtient deux signaux électriques séparés dont l'un est une mesure de la pression dynamique, et l'autre, une mesure de la vitesse du courant.

4. Procédé suivant la revendication 1, caractérisé en ce que l'on utilise un corps perturbateur rigide, fortement serré, sur lequel on détecte la pression dynamique elle-même comme grandeur de mesure sous la forme d'un signal électrique, et que l'on obtient, à partir de l'effet de la différence de pression provoquée par le décollage de la turbulence perpendiculairement à la direction de l'écoulement, un second signal électrique dont la fréquence est une mesure de la vitesse de l'écoulement.

5. Dispositif pour l'exécution du procédé suivant l'une des revendications 1 à 4, comportant un corps perturbateur (1, 11) qui doit être introduit dans le courant, serré sur l'un ou sur les deux côtés, un récepteur des valeurs de mesure (4, 5, 6, 14) et un dispositif électronique d'évaluation des signaux, caractérisé en ce que le corps perturbateur (1) peut être introduit perpendiculairement à la direction du courant, et sert lui-même de récepteur de valeur de mesure, ou que un ou deux récepteurs de valeurs de mesure (4, 5, 6, 14) sont fixés directement sur ce corps perturbateur (1).

6. Dispositif suivant la revendication 5, caractérisé en ce que le corps perturbateur (1) est constitué par un fil métallique déformable électriquement, conducteur de l'électricité, qui sert de récepteur de mesure, et que la résistance électrique du corps perturbateur (1) peut être modifiée au cours de sa déformation.

7. Dispositif suivant la revendication 5, caractérisé en ce que l'on prévoit un corps perturbateur cylindrique déformable élastiquement, dans lequel passe, comme récepteur de mesures (4), un fil extensible.

8. Dispositif suivant la revendication 5, caractérisé en ce que le corps perturbateur (1) est élastiquement déformable, et que deux récepteurs de mesures (5, 6), disposés perpendiculairement l'un à l'autre, sont prévus sur le corps perturbateur (1), l'un détectant toujours principalement la force de résistance, et l'autre, principalement la force de poussée.

9. Dispositif suivant la revendication 6, caractérisé en ce que le corps perturbateur (1) est réalisé en deux pièces, ces deux pièces (7, 8) étant reliées ensemble aux extrémités, et que les moments d'inertie des surfaces des deux parties sont chaque fois optimisés de telle façon qu'une partie détecte principalement la force de résistance, et l'autre partie, principalement la force de poussée.

10. Dispositif suivant la revendication 5, caractérisé en ce que le corps perturbateur (9) est élastique, et comporte une plaque (10) qui se dresse perpendiculairement à la direction du courant, et que des extensomètres (12) sont montés en croix sur les faces avant et arrière du corps perturbateur (9).

11. Dispositif suivant la revendication 5, caractérisé en ce que le corps perturbateur (1) est serré rigidement et solidement, et qu'au moins trois perforations (13, 14, 17) sont prévues sur ce corps perturbateur, au moins une perforation (13) se terminant sur la surface avant, et les autres perforations (14, 17) allant vers les surfaces latérales parallèles à la direction du courant, et que l'ouverture avant (13) et une des ouvertures latérales (14) servent à détecter la pression dynamique, et les ouvertures latérales (15, 16) qui se font face, servent à détecter la fréquence de décollage de la turbulence, et que sont prévus des détecteurs de mesures qui transforment les valeurs de pression constatées en signaux électriques.

12. Dispositif suivant la revendication 11 caractérisé en ce que deux ouvertures (15, 16), latérales, qui se font face, sont reliées ensemble et qu'il est prévu dans le canal de liaison (17) un anémomètre à fil chaud (18) avec lequel on mesure la fréquence du courant oscillant qui s'établit en raison des variations de pression.

Fig. 1

Fig. 2

Fig. 3

5

7

Z

Fig. 4

1

10

9

11

12

V

Fig. 5

Fig. 6

Fig. 7

a)

24    24  1  26

b)

26  25    25  1  26

Fig. 8